(19)

Europäisches
Patentamt
European
Patent Office
Office européen
des brevets

(11) **EP 2 541 980 A1**

(12) **EUROPEAN PATENT APPLICATION**
published in accordance with Art. 153(4) EPC

(43) Date of publication:
**02.01.2013 Bulletin 2013/01**

(21) Application number: **11747476.7**

(22) Date of filing: **24.02.2011**

(51) Int Cl.:
*H04W 16/14* (2009.01)          *H04J 3/00* (2006.01)
*H04W 28/04* (2009.01)

(86) International application number:
**PCT/JP2011/054191**

(87) International publication number:
**WO 2011/105516 (01.09.2011 Gazette 2011/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2010 JP 2010038620**

(71) Applicant: **Kyocera Corporation**
**Kyoto-shi, Kyoto 612-8501 (JP)**

(72) Inventor: **ARAKAWA Tadahiro**
**Kanagawa 224-8502 (JP)**

(74) Representative: **Schwabe - Sandmair - Marx**
**Patentanwälte**
**Stuntzstraße 16**
**81677 München (DE)**

(54) **MOBILE TERMINAL DEVICE, BASE STATION, AND INTERFERENCE AVOIDANCE METHOD**

(57)      Disclosed is a portable terminal possible to perform a predetermined interference avoiding operation for avoiding interference from other wireless communication systems, with more reliability. A portable terminal device (100) is provided with a wireless communication unit (116), which performs wireless communication via a base station (120) using a TDMA/TDD system; a frame-error monitoring unit (122), which monitors a presence or absence of the frame error in respective consecutive frames composed of a plurality of time slots; a storage unit (104), which stores the presence or absence frame errors as a frame error array; a calculation unit (126), which calculates a degree of similarity between the frame error array and each of delayed frame error arrays obtained by delaying the frame error array by every one frame; an determining unit (130), which determines whether periodic frame errors are present, based on the degree of similarity; and an interference avoiding unit (132), which performs a procedure for the periodic frame errors in a case where it is determined that the periodic frame errors are present.

FIG. 1

Europe EP 2 541 980 A1

## Description

## Technical Field

The present invention relates to a portable terminal device and a base station which perform wireless communication in a time division multiple access/time division duplex (TDMA/TDD) system, and a method of avoiding interference for them.

## Background Art

Wireless terminal devices such as Personal Handy-phone Systems (PHS) and portable phones perform wireless communication with base stations in frame for transmitting voices and data. The communication quality deteriorates due to thermal noise, interference with other systems, and the like. Accordingly, a cyclic redundancy check (CRC) may be provided in frame to monitor the communication quality. For example, a frame error rate (hereinafter, referred to as 'an FER') may be monitored, and an interference avoiding operation may be performed or a predetermined operation such as a muting process on voice signals may be performed.

For example, Japanese Patent Application Laid-Open No. 2002-118875 discloses a technology for performing a predetermined interference avoiding operation when an FER, which is an error frequency, exceeds a certain threshold value. When this threshold value is excessively lowered, a coverage range narrows. On the contrary, when the threshold value is excessively raised, even when the communication quality deteriorates, the predetermined interference avoiding operation may not be performed, so that telephone conversion is intermittently interrupted and listening is very difficult. Accordingly, in view of the environment of use of each communication system, an appropriate threshold value is set to the corresponding system.

## Summary of Invention

Previously, a frequency band has been assigned to communication systems of each system and then a single system have existed in the same frequency band. Therefore, when a threshold value for an FER is set as disclosed in Japanese Patent Application Laid-Open No. 2002-118875, it is possible to make an operation of avoiding interference between own system work efficiently.

However, according to technologies as disclosed in Japanese Patent Application Laid-Open No. 2002-118875, in a case where an FER is equal to or less than a threshold value, even when listening to a voice becomes difficult in a periodic or specific pattern, the predetermined interference avoiding operation is not performed. In a case where communication systems of different systems exist in the same frequency band, sometimes, their carrier frequencies assigned for frame structures and report signals is different from each system. Therefore, monitoring the threshold value for the FER may not be sufficient to avoid interference.

An object of the present invention is to provide a portable terminal device and a base station capable of performing a predetermined interference avoiding operation in a case where frame errors occur in a periodic or specific pattern due to interference from other communication systems, and a method of avoiding interference for them.

## Solution to Problems

In order to solve the problem, a representative configuration of a portable terminal device of the present invention comprises: a wireless communication unit, which performs wireless communication via a base station in a TDMA/TDD system; a frame-error monitoring unit, which monitors a presence or absence of the frame error in respective consecutive frames composed of a plurality of time slots; a storage unit, which stores the presence or absence of the frame error as a frame error array; a calculating unit, which calculates a degree of similarity between the frame error array and each of delayed frame error arrays obtained by delaying the frame error array by every one frame; a determining unit, which determines whether periodic frame errors are present, based on the degree of similarity; and an interference avoiding unit, which performs a procedure for the periodic frame errors in a case where it is determined that the periodic frame errors are present.

According to this configuration, it is possible to determine whether there are periodic frame errors caused by interference from another wireless communication system, based on the degree of similarity. Therefore, even when the FER is equal to or less than a threshold value, in a case where frame errors occurs in a periodic or specific pattern due to interference from another wireless communication system, it is possible to perform a predetermined interference avoiding operation.

The determining unit may determines whether the periodic frame errors are present, based on the number of times the degree of similarity exceeds a predetermined threshold value.

According to this configuration, it is only necessary to count the number of times the degree of similarity exceeds the threshold value, while changing. Therefore, a process of accurately grasping the timings when the degree of similarity exceeds the predetermined threshold value is unnecessary.

The procedure of the interference avoiding unit may be one of an channel change of the portable terminal device to the base station and an handover to another base station in a case where a plurality of base station are present in a communication region. When the channel change or the handover is performed, it is possible to avoid interference.

The determining unit may change the threshold value according to a notification from a base station. According to this configuration, it is possible to change the threshold value for the degree of similarity as a simple parameter of the same algorithm without changing an algorithm for avoiding interference.

The degree of similarity may be an autocorrelation coefficient.

The degree of similarity may be based on a pattern data array of frame errors stored in advance in the storage unit and a detected data array of each of the delayed frame errors.

According to this configuration, a transmission pattern data array according to transmission timings of a control channel of a base station of another wireless communication system is stored in advance in the storage unit, and then it is determined whether a degree of similarity with the detected data array exceeds a predetermined threshold value. As a result, it is possible to perform procedure for periodic frame errors.

In order to solve the problem, a representative configuration of a base station of the present invention comprises: a wireless communication unit, which performs wireless communication with a portable terminal device in a TDMA/TDD system; a frame-error monitoring unit, which monitors whether a presence or absence of the frame error in respective consecutive frames composed of a plurality of time slots; a storage unit, which stores the presence or absence of the frame error as a frame error array; a calculating unit, which calculates a degree of similarity between the frame error array and each of delayed frame error arrays obtained by delaying the frame error array by every one frame; a determining unit, which determines whether periodic frame errors are present, based on the degree of similarity; and an interference avoiding unit, which performs procedure for the periodic frame errors in a case where it is determined that the periodic frame errors are present.

In order to solve the problem, a representative method of avoiding interference for a wireless communication system in which a base station and a portable terminal device perform wireless communication in a TDMA/TDD system, comprising: monitoring a presence or absence of the frame error in respective consecutive frames composed of a plurality of time slots; storing the presence or absence of the frame error as a frame error array; calculating a degree of similarity between the frame error array and each of delayed frame error arrays obtained by delaying the frame error array by every one frame; determining of correlation-coefficient to determine whether periodic frame errors are present, based on the degree of similarity; and performing procedure for the periodic frame errors in a case where it is determined that the periodic frame errors are present.

The components corresponding to the technical idea of the above-mentioned portable terminal device, and the description thereof can be applied even to the corresponding base station and the corresponding method of avoiding interference.

**Advantage Effects of Invention**

According to the present invention, it is possible to determine whether there are periodic frame errors caused by interference from another wireless communication system, based on the degree of similarity. Therefore, in a case where frame errors occur in a periodic or specific pattern due to interference from another wireless communication system, it is possible to perform a predetermined interference avoiding operation

**Brief Description of Drawings**

FIG. 1 is a block diagram illustrating an embodiment of a portable terminal device of the present invention.
FIG. 2 is a view illustrating an example of interference which a wireless communication system composed of the portable terminal device of FIG. 1 and a base station receives from another wireless communication system.
FIG. 3 is a flow chart illustrating an embodiment of a method of avoiding interference, which is performed by the portable terminal device of FIG. 1.
FIG. 4 is a view illustrating an example of a frame error array stored in a frame-error-array storing step of FIG. 3 and a calculation result of the subsequent autocorrelation-coefficient calculating step.
FIG. 5 is a view illustrating another example of the frame error array stored in the frame-error-array storing step of FIG. 3 and a calculation result of the subsequent autocorrelation-coefficient calculating step.
FIG. 6 is a view illustrating changes of various parameters various parameters for the method of avoiding interference in the entire wireless communication system of FIG. 2.

**Description of the Embodiments**

Hereinafter, an appropriate embodiment of the present invention will be described in detail with reference to the accompanying drawings. Dimensions, materials, specific numerical values, and the like to be shown in the embodiment are illustrative for facilitating the understanding of the invention, and do not limit the present invention except for cases of noting them. Further, in the present specification and the drawings, components having the substantially same function and configuration will be denoted by the same reference symbol, and a redundant description will not be repeated. Furthermore, components not directly related to the present invention are not shown in the drawings. Moreover, signals and currents will be denoted by reference symbols of paths for them.

(Portable Terminal Device)

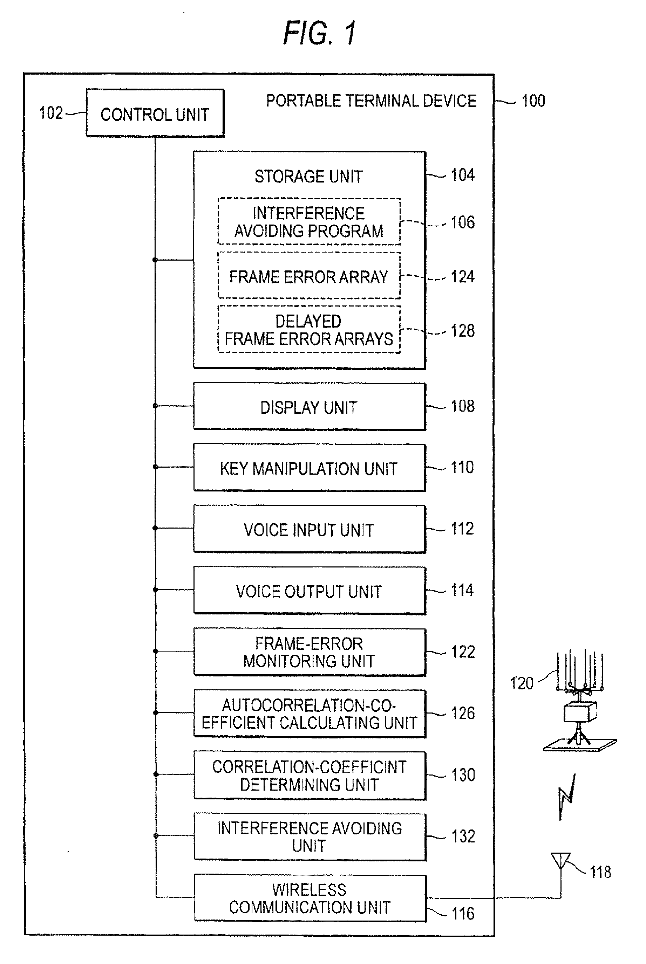

FIG. 1 is a block diagram illustrating an embodiment of a portable terminal device of the present invention. A portable terminal device 100 includes a control unit 102, and the control unit 102 manages and controls the entire device 100 by a semiconductor integrated circuit including a central processing unit (CPU). The control unit 102 executes a program stored in a storage unit 104, thereby implementing a predetermined function.

The storage unit 104 is composed of, for example, a ROM, a RAM, an EEPROM, a non-volatile RAM, or a flash memory, and stores various programs (applications) and the like installed in the terminal. The storage unit 104 stores an interference avoiding program 106 for avoiding interference of other wireless communication systems.

A display unit 108 is composed of, for example, a liquid crystal display or an electroluminescence display, and a controller thereof, and can display operation screens of applications, a telephone number of a communication partner, an address book, a standby screen, etc.

A key manipulation unit 110 is composed of, for example, a keyboard, a D-pad, a joystick, or a touch panel, and receives user's manipulation inputs. According to manipulation on the key manipulation unit 110, an interference avoiding program 106 can be additionally stored from the external in the storage unit 104 or can be wirelessly downloaded.

A voice input unit 112 is composed of a voice recognizing unit such as a microphone, receives the voice of a user, and converts the user's voice into an electric signal which is processable in the terminal. A voice output unit 114 is composed of, for example, a speaker, receives a voice signal of a communication partner, converts the voice signal into a voice, and outputs the voice. Also, the voice output unit 114 can output, for example, ring tones, manipulation tones of the key manipulation unit 110, and alarm tones.

A wireless communication unit 116 establishes wireless communication with a base station via an antenna 118 in a wireless communication system of TDMA/TDD, and performs voice communication with a communication partner and data communication with a web server.

A frame-error monitoring unit 122 monitors that any frame error is present in respective consecutive frames composed of a plurality of time slots to be transmitted via the wireless communication unit 116. A presence of frame errors is stored as a frame error array 124 over a predetermined monitoring time $T_{em}$ in the storage unit 104.

The frame error array 124 is delayed (time-shifted) by every one frame, so that delayed frame error arrays 128 are obtained, and then the delayed frame error arrays 128 are stored in the storage unit 104. An autocorrelation-coefficient calculating unit 126 (an example of a calculating unit) calculates an autocorrelation coefficient (an example of a degree of similarity) of the frame error array 124 and each of the delayed frame error arrays 128.

A correlation-coefficient determining unit 130 (an example of a determining unit) determines whether any periodic frame errors are present, based on the autocorrelation coefficient calculated by the autocorrelation-coefficient calculating unit 126. An interference avoiding unit 132 performs procedure for errors in a case where the correlation-coefficient determining unit 130 determines that periodic errors are present.

(Example(s) of Interference)

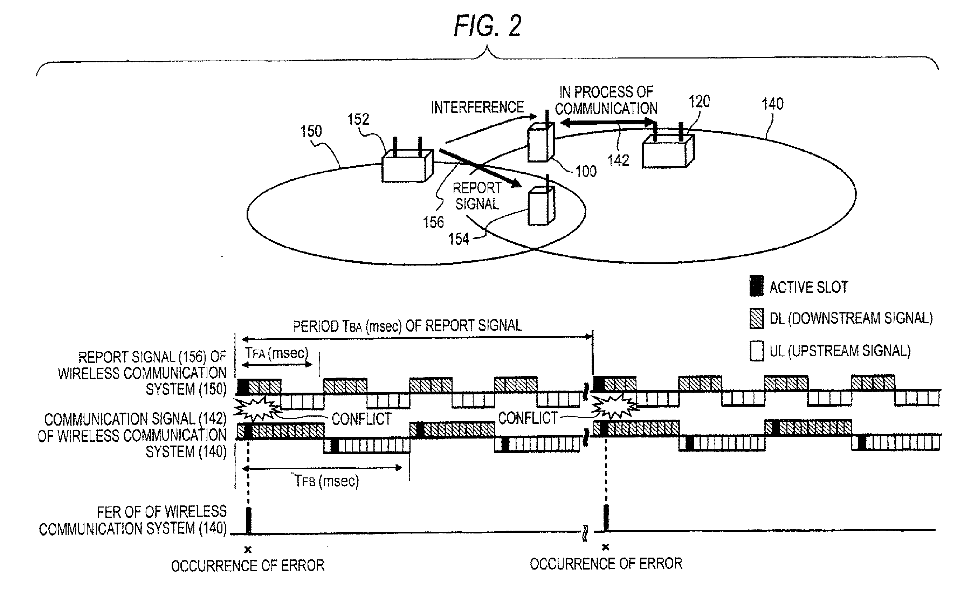

FIG. 2 is a view illustrating an example of interference, which a wireless communication system 140 composed of the portable terminal device 100 of FIG. 1 and a base station 120, receives from another wireless communication system 150. , For example, the wireless communication system 140, which receives interference, is a DECT system, and the wireless communication system 150, which is interfering, is a PHS.

The base station 152 of the wireless communication system 150 informs a system-information report signal 156 to a portable terminal device 154 belonging to the wireless communication system 150, with a period $T_{BA}$. In the wireless communication system 140 of FIG. 2, the base station 120 and the portable terminal device 100 are linked with each other, and are in a communication phase. As shown in FIG. 2, when the two wireless communication systems 140 and 150 are close to each other, the report signal 156 of the wireless communication system 140 interferes in communication of the base station 120 and the portable terminal device 100 of the system 140 in the communication phase.

The system-information report signal 156 (downstream report signal) of the wireless communication system 150 cannot normally be received by the base station 152 by it self. Accordingly, the base station 152 cannot know whether the system-information report signal 156 interferes with another wireless communication system, for example, the wireless communication system 140. Accordingly, in a case where interference occurs between different systems as shown in FIG. 2, the wireless communication system 140 receiving the interference needs to avoid the interference. The wireless communication system 140 monitors an FER.

The system-information report signal 156 is generally reported with a period longer than a frame period of communication for avoiding a conflict with another wireless communication system to improve a traffic density. For example, the PHS has a frame period of 5 ms (milliseconds) during communication, whereas the period of the system-information report signal 156 should be set to at least 125 ms (8 or less frames per 1 second). In the present embodiment, as shown in FIG. 2, the frame period $T_{FA}$ of communication of the wireless communication system 150 is 5 ms, and the period $T_{BA}$ of the system-information report signal 156 is set to 250 ms. Meanwhile, the frame period $T_{FB}$ of a communication signal 142 of the system 140 is 10 ms.

When the wireless communication system 140 receives interference, the FER monitored by the wireless communication system 140 deteriorates, and then it is possible to detect the interference. In a case where interference is detected, the wireless communication system 140 performs an interference avoiding operation such as channel switching, voice muting, handover, or the like. However, based on a condition that the FER will exceed a predetermined threshold value, the wireless communication system 140 considers deterioration of the FER as interference. This is because, if even temporarily errors occurring due to factors other than interference are considered as interference, a useless interference avoiding operation is frequently performed.

Accordingly, for example, when the threshold value for the FER of the system 140 is set to 5%, unless errors of 5 or more frames per 1 second occur, the system 140 having the frame period $T_{FB}$ of 10 ms does not perform the interference avoiding operation. Then, the system-information report signal 156 (only a downstream signal) from the base station 152 of the wireless communication system 150 is reported only once for 250 ms, and then an error due to interference occurs only once for 250 ms, as shown in the 'FER of the wireless communication system 140' of FIG. 2. As a result, since four errors (corresponding to four frames) occur for one second, the FEF becomes 4%, and it is less than the threshold value of 5%, and thus the interference avoiding operation is not performed. In other words, even when a communication channel regularly receives interference of four frames per 1 second, and periodic noise like putput noise occurs which is harsh to hear, the interference avoiding operation is not performed.

According to an embodiment of a method of avoiding interference of the present invention, as described above, it is possible to solve the problem of the technology for avoiding interference only based on the threshold value for FER, so that even when the FER is equal to or less than the threshold value, a predetermined interference avoiding operation is performed in a case where periodic errors occur. Hereinafter, the above-mentioned method of avoiding interference will be described.

(Method of avoiding interference)

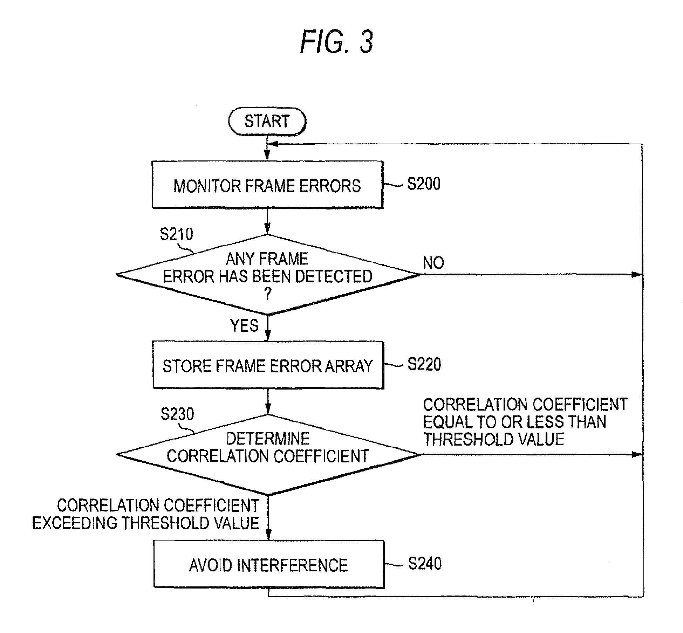

FIG. 3 is a flow chart illustrating an operation example of the interference avoiding program 106 stored in the storage unit 104 of FIG. 1. A method of avoiding interference for the wireless communication system, in which the base station 120 and the portable terminal device 100 perform wireless communication in the TDMA/TDD system, is performed in the following procedure.

First, the frame-error monitoring unit 122 monitors each frame of a wireless signal to be transmitted via the wireless communication unit 116, and tries to detect a frame error (a frame-error monitoring step S200). This frame-error monitoring step S200 is repeated until a first frame error is detected as shown in a step S210.

When a frame error is detected for the first time, a frame-error-array storing step S220 of storing a presence of frame errors, as a frame error array, is performed. The frame error array is obtained by storing the presence of frame errors in the communication signal 142 of the system 140 for each frame, and is obtained by storing a frame error history as a series of 1 or 0, in which a frame having an error is represented by 1 and a frame having no error is represented by 0.

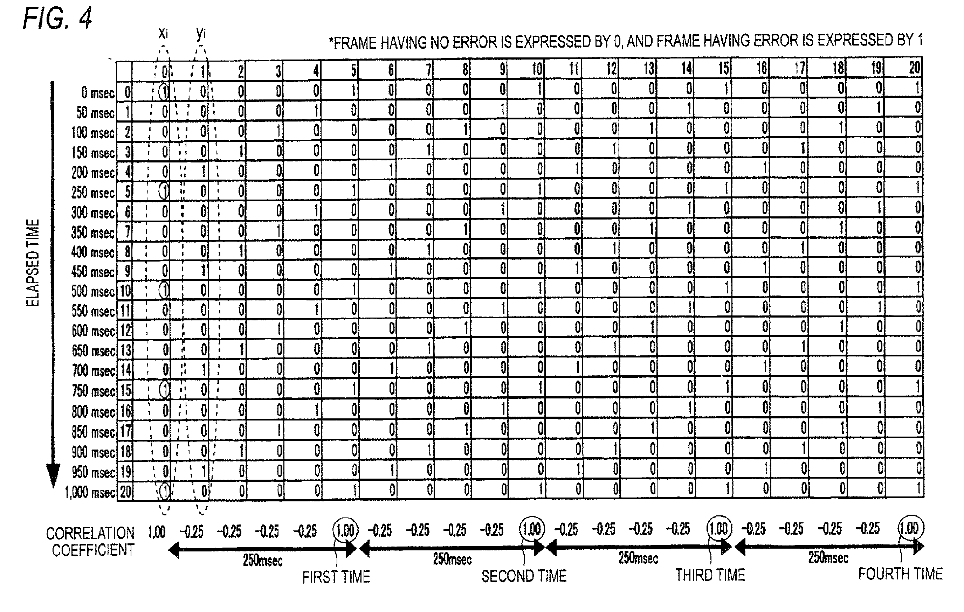

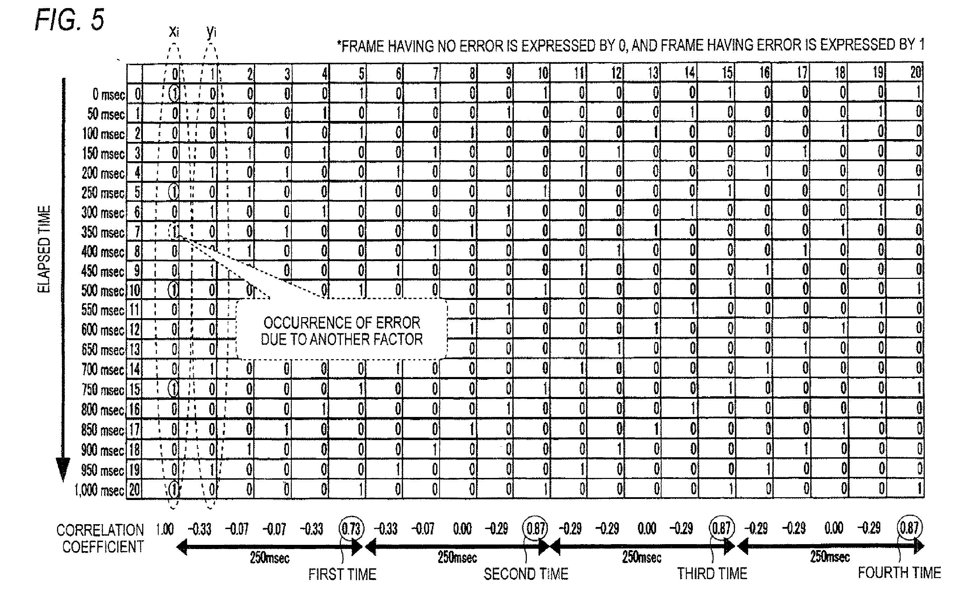

FIG. 4 or 5 is a view illustrating an example of the frame error array stored in the frame-error-array storing step S220 and a calculation result of the subsequent autocorrelation-coefficient calculating step S230. The frame error array is obtained along the time axes (vertical axes) of FIGS. 4 and 5, and is a series of 1 or 0 as described above.

In the autocorrelation-coefficient calculating step S230, an autocorrelation coefficient of a frame error array xi and each of delayed frame error arrays yi obtained by delaying the frame error array by every one frame is calculated.

The frame error array xi of the left end of FIG. 4 is a first error history recorded from when the first error has been detected. Further, for convenience of drawing, in FIG. 4, each frame error array is shown as a sequence of numbers for every 50 ms (every 5 frames). However, frame errors are actually recorded every 10 ms (every one frame).

On the immediate right of the frame error array xi, a delayed frame error array yi obtained by delaying the frame error array xi by 50 ms (corresponding to 5 frames) is shown. Although the delayed frame error arrays are actually generated by delaying the frame error array by every 10 ms (every one frame), for conveyance of drawing, the delayed frame error array yi obtained by delay corresponding to 5 frames is shown.

Next, an autocorrelation coefficient of the frame error array xi and the delayed frame error array yi is calculated. In a case where data arrays $(x, y)$ $(= \{(xi, yi)\}$, wherein i is 1, 2, $\cdots$, and n) composed of two sets of numerical values are given, the correlation coefficient of these data arrays can be obtained as follows. Further, the correlation coefficient may be calculated by a method other than the following method, and the degree of similarity may be expressed in other ways without using the correlation coefficient.

[Equation 1]

$$r_{xy} = \frac{\sum_{i=1}^{n} (x_i - \bar{x})(y_i - \bar{y})}{\sqrt{\sum_{i=1}^{n} (x_i - \bar{x})^2}\sqrt{\sum_{i=1}^{n} (y_i - \bar{y})^2}}$$

Here, $\bar{x}$ and $\bar{y}$ are arithmetic average of data x (= {xi}) and y (= {yi}), respectively.

Additionally, the first frame error is detected in the step S210, the present program does not proceed to the next step S220. This is because a case where any error is not present becomes a singular point (where both of xi and yi are 0). Although not shown in FIG. 3, in the step S210, in a case where continuous errors exceeding the predetermined monitoring time $T_{em}$ are not present, the present program may stop.

A process of calculating the autocorrelation coefficient is as follows. The I is fixed the left end frame error array xi, and the delayed frame error arrays yi obtained by sequentially delaying by every one frame, and thus the autocorrelation coefficient are calculated, respectively. As a result, the values of the autocorrelation coefficients show a periodic change in which -0.25 is successively obtained four times, and 1.00 is obtained one time, as shown in FIG. 4.

FIG. 4 shows a typical example, in which periodic interference from another wireless communication system 150 has occurred. In FIG. 4, frame errors are successively detected in 205 frames (41 frames in FIG. 4, and the monitoring time $T_{em}$ of 2050 ms), and the lengths of the frame error array xi and each delayed frame error array yi correspond to 105 frames (21 frames in FIG. 4). The monitoring time $T_{em}$ may be easily changeable as a parameter.

The monitoring time $T_{em}$ may be set to an appropriate value based on the capacity of the storage unit 104, the detection accuracy of interference avoidance, the responsibility of interference avoidance, and the like which the portable terminal device 100 and the base station 120 have. For example, in order to increase the detection accuracy, it is necessary to monitor frames for a long time. However, incase that the detection is performed for too long, the detection of interference is late, and the responsibility of the interference avoiding operation becomes worse. Further, since monitoring for a long time needs a high-capacity storage unit for computing the correlation coefficients, it is preferable to consider the capability of a mountable storage unit to set the monitoring time $T_{em}$.

Next, as shown in FIG. 3, a correlation-coefficient determining step S230 of determining whether periodic frame error are present based on the autocorrelation coefficients is performed. Although an autocorrelation coefficient $r_{xy}$ satisfies $-1 \le r_{xy} \le +1$, in the correlation-coefficient determining step S230, a threshold value for the calculated autocorrelation coefficient is provided, and when the calculated autocorrelation coefficient exceeds the threshold value, it is determined that the frame error array xi and the delayed frame error array yi are correlated and the frame errors are periodic.

For example, the threshold value for the autocorrelation coefficient is set to 0.7, in FIG. 4, since only periodic interference from another wireless communication system 150 occurs, the autocorrelation coefficient exceeds the threshold value of 0.7 once for delay of every 250 ms shown in the horizontal axis of FIG. 4, that is, a total of four times. Accordingly, in the correlation-coefficient determining step S230 shown in FIG. 3, it is possible to determine that an periodic error occurs once every 250 ms, and the system 140 receives interference, and then the present program can immediately proceed to an interference avoiding step S240 (interference avoiding operation).

FIG. 5 shows an example of a case where, in addition to the periodic interference from another wireless communication system 150, a single error has occurred due to another factor. Even in this example, the autocorrelation coefficient exceeds the threshold value of 0.7 once for delay of every 250 ms shown in the horizontal axis of FIG. 5, that is, a total of four times. Therefore, the present program can immediately proceed to the interference avoiding step S240. According to the present embodiment, even in a case where a frame error such as thermal noise different from interference occurs like in the example of FIG. 5, it is possible to detect the periodicity of frame errors.

In the interference avoiding step S240 of FIG. 3, a procedure for the errors is performed. In the interference avoiding step S240, channel switching of the portable terminal device 100 to the base station 120 is performed, and in a case where a plurality of base station are present in a communication region, handover to another base station is performed. When the channel switching or the handover is performed, it is possible to avoid the interference.

According to the above-mentioned configuration, it is possible to determine whether there are periodic frame errors caused by interference from another wireless communication system 150, based on the autocorrelation coefficient. Therefore, even when the FER is equal to or less than the threshold value, in a case where frame errors occurs in a periodic or specific pattern due to interference from the another wireless communication system 150, it is possible to perform the predetermined interference avoiding operation.

As described above, the correlation-coefficient determining unit 130 determines whether periodic frame errors are present, based on the number of times the autocorrelation coefficient exceeds the predetermined threshold value. In a case where the autocorrelation coefficient changes periodically, the autocorrelation coefficient exceeds the threshold value at a certain timing, and then the autocorrelation coefficient has a value exceeding the threshold value for a while, and becomes the threshold value or less again. In the present embodiment, since it is only necessary to count the number of times the changing autocorrelation coefficient exceeds the threshold value, a process of accurately measuring the timing of 250 ms is not necessary.

The portable terminal device 154 stores a pattern data array according to the transmitting timings of the system-information report signals of a plurality of kinds of other wireless communication systems assumed in advance, in the storage unit 104 in advance. Then, when the degree of similarity of a frame error array, detected by the frame-error monitoring unit 122 for monitoring a presence of frame errors, with a detected data array exceeds a predetermined threshold value, the determining unit determines that periodic interference from another wireless communication system has occurred as interference, and performs the interference avoiding operation.

Further, in a case where the FER falls into a range of the predetermined threshold value or less as the result of the interference avoiding operation, it is determined that interference is avoided.

Meanwhile, in case that the FER does not fall into the range of the threshold value or less even when the interference avoiding operation is tried, the degree of similarity is calculated based on an untried other pattern data array, and then it is determined whether periodic FERs are present. When this interference avoiding operation is repeated, it becomes possible to perform procedure for periodic frame errors.

(Base Station)

The method of avoiding interference may be performed in the base station 120. In this case, it is preferable that the base station is provided with the wireless communication unit 116, the frame-error monitoring unit 122, the storage unit 104, the autocorrelation-coefficient calculating unit 126, the correlation-coefficient determining unit 130, and the interference avoiding unit 132 of the portable terminal device 100 shown in FIG. 1.

(Change of Parameter)

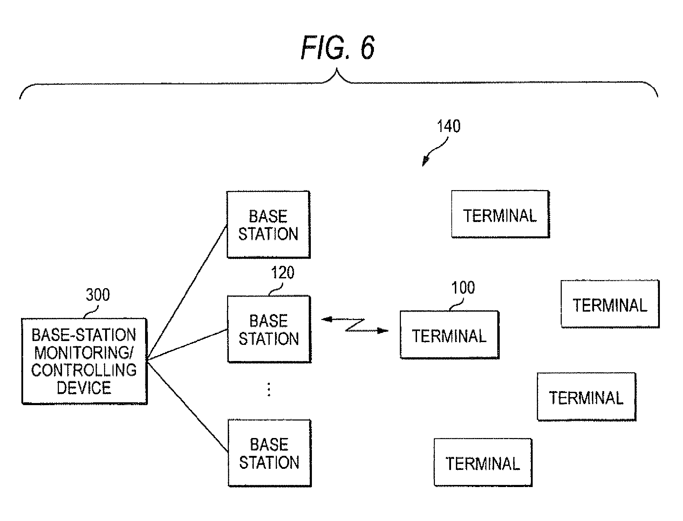

FIG. 6 is a view illustrating changes of various parameters for the method of avoiding interference change in the entire wireless communication system 140 of FIG. 2. The various parameters are the threshold value for the autocorrelation coefficient, the monitoring time $T_{em}$, and the like. As shown in FIG. 6, the wireless communication system 140 includes not only the base station 120 and the portable terminal device 100 of FIG. 1 but also a plurality of other base stations and portable terminal devices. In this case, a base-station monitoring/controlling device 300 may notify a change of a parameter to the base station 120 and the other base stations, and the individual base stations may notify the change of the parameter to the portable terminal device 100 and the other portable terminal devices. The base-station monitoring/controlling device 300 may be a server such as a computer.

The correlation-coefficient determining unit 130 of the portable terminal device 100 can change the threshold value for the autocorrelation coefficient, the monitoring time $T_{em}$, or the like according to the above-mentioned notification from the base station 120. According to this configuration, it is possible to change the threshold value for the autocorrelation coefficient, the monitoring time $T_{em}$, or the like as a simple parameter of an algorithm for avoiding interference, without changing the algorithm. In other words, a value reasonable for the system 140 can be verified, determined, and set as a new autocorrelation coefficient or the like.

Further, the individual steps of the method of avoiding interference of the present specification are not necessarily processed in such time-series according to the order described as the flow chart of FIG. 3, but may include parallel processes or processes according to subroutines.

(Summary of Effects of Present Embodiment)

Hereinafter, the effects of the present embodiment will be enumerated.

(1) Since monitoring the periodic characteristic of the FER has been added to interference avoidance that has determined only by the threshold value for the FER, it is possible to suppress periodic harsh sounds from continuing for a long time.

(2) Since the autocorrelation coefficient is calculated, even when any error other than interference from the other systems occurs, the occurrence of the interference can be detected.

(3) Since it is possible to use the threshold value for the FER according to the related art, the present embodiment does not affect existing system design.

(4) Therefore, the present embodiment does not affect the coverage range or traffic of the wireless communication system.

(5) It is possible to implement a wireless communication system resistant to interference occurring in a case where different systems are present in the same frequency band.

(6) Since the method of avoiding interference based on the FER is just added as a program, it is possible to apply the present invention to an existing system by changing only software, without changing the hardware of the existing system.

(7) Therefore, even when a system is operating, running change is easy.

(8) The present embodiment is available even when system which has not been used is introduced, according to legislative amendments.

(9) It is possible to flexibly change the threshold value and the monitoring time, which are the various parameters of the program, according to interference which a system receives in its environment.

(10) In a system composed of a plurality of base stations, a monitoring device for monitoring the base stations is provided. In this case, it is possible to update various parameters in the order of the monitoring device, the base stations, and terminals. Therefore, it is possible to dynamically control the system, and it is possible to establish a system having a versatility and a resistant to interference.

Also, according to the present invention, it is possible to provide a portable terminal device and a base station capable of performing a predetermined interference avoiding operation in a case where frame errors occurs in a periodic or specific pattern due to interference from another wireless communication system even when the FER is equal to or less than the threshold value, and a method of avoiding interference for them.

Although the appropriate embodiment of the present invention has been described with reference to the accompanying drawings, the present invention is not limited to the corresponding example. It is apparent that those skilled in the art can contrive various modifications or corrections within a range described in claims, and it can be understand that the modifications or corrections falls within the technical scope of the present invention. The present application is based on Japanese Patent Application (Application No. 2010-038620) filed on February 24, 2010 whose contents are incorporated here by reference.

**Industrial Applicability**

The present can be used for a portable terminal device and a base station performing wireless communication in a TDMA/TDD system, and a method of avoiding interference for them.

**Description of Reference Numerals and Signs**

| 100, 154 | PORTABLE TERMINAL DEVICE |
|---|---|
| 102 | CONTROL UNIT |
| 104 | STORAGE UNIT |
| 106 | INTERFERENCE AVOIDING PROGRAM |
| 108 | DISPLAY UNIT |
| 110 | KEY MANIPULATION UNIT |
| 112 | VOICE INPUT UNIT |
| 114 | VOICE OUTPUT UNIT |
| 116 | WIRELESS COMMUNICATION UNIT |
| 118 | ANTENNA |
| 120, 152 | BASE STATION |
| 122 | FRAME-ERROR MONITORING UNIT |
| 124 | FRAME ERROR ARRAY |
| 126 | AUTOCORRELATION-COEFFICIENT CALCULATING UNIT |
| 128 | DELAYED FRAME ERROR ARRAY |
| 130 | CORRELATION-COEFFICIENT DETERMINING UNIT |
| 132 | INTERFERENCE AVOIDING UNIT |
| 140, 150 | WIRELESS COMMUNICATION SYSTEM |
| 142 | COMMUNICATION SIGNAL |
| 156 | SYSTEM-INFORMATION REPORT SIGNAL |
| 300 | BASE-STATION MONITORING/CONTROLLING DEVICE |

**Claims**

1. A portable terminal device comprising:

 a wireless communication unit, which performs wireless communication via a base station in a TDMA/TDD system;
 a frame-error monitoring unit, which monitors a presence or absence of the frame error in respective consecutive frames composed of a plurality of time slots;
 a storage unit, which stores the presence or absence of the frame error as a frame error array;
 a calculating unit, which calculates a degree of similarity between the frame error array and each of delayed frame error arrays obtained by delaying the frame error array by every one frame;
 a determining unit, which determines whether periodic frame errors are present, based on the degree of similarity; and
 an interference avoiding unit, which performs a procedure for the periodic frame errors in a case where it is determined that the periodic frame errors are present.

2. The portable terminal device according to claim 1, wherein, in case that the determining unit determines that the periodic frame errors are present in a wireless communication system, in which a threshold value for a frame error rate about whether to perform the procedure for the frame errors has been set, even when the frame error rate is equal to or less than the threshold value about whether to perform procedure, the interference avoiding unit performs interference avoidance.

3. The portable terminal device according to claim 1 or 2,
 wherein the determining unit determines whether the periodic frame errors are present, based on the number of times the degree of similarity exceeds a predetermined threshold value.

**4.** The portable terminal device according to any one of claims 1 to 3,
wherein the procedure of the interference avoiding unit is one of an channel change of the portable terminal device to the base station and an handover to another base station.

**5.** The portable terminal device according to any one of claims 1 to 4,
wherein the determining unit changes the threshold value according to a notification from a base station.

**6.** The portable terminal device according to any one of claims 1 to 5,
wherein the degree of similarity is an autocorrelation coefficient.

**7.** The portable terminal device according to any one of claims 1 to 5,
wherein the degree of similarity is based on a pattern data array of frame errors stored in advance in the storage unit and a detected data array of each of the delayed frame errors.

**8.** A base station comprising:

a wireless communication unit, which performs wireless communication with a portable terminal device in a TDMA/TDD system;
a frame-error monitoring unit, which monitors whether a presence or absence of the frame error in respective consecutive frames composed of a plurality of time slots;
a storage unit, which stores the presence or absence of the frame error as a frame error array;
a calculating unit, which calculates a degree of similarity between the frame error array and each of delayed frame error arrays obtained by delaying the frame error array by every one frame;
a determining unit, which determines whether periodic frame errors are present, based on the degree of similarity; and
an interference avoiding unit, which performs procedure for the periodic frame errors in a case where it is determined that the periodic frame errors are present.

**9.** The base station according to claim 8,
wherein, in case that the determining unit determines that the periodic frame errors are present in a wireless communication system, in which a threshold value for a frame error rate about whether to perform the procedure for the frame errors has been set, even when the frame error rate is equal to or less than the threshold value about whether to perform procedure, the interference avoiding unit performs interference avoidance.

**10.** A method of avoiding interference for a wireless communication system in which a base station and a portable terminal device perform wireless communication in a TDMA/TDD system, comprising:

monitoring a presence or absence of the frame error in respective consecutive frames composed of a plurality of time slots;
storing the presence or absence of the frame error as a frame error array;
calculating a degree of similarity between the frame error array and each of delayed frame error arrays obtained by delaying the frame error array by every one frame;
determining of correlation-coefficient to determine whether periodic frame errors are present, based on the degree of similarity; and
performing procedure for the periodic frame errors in a case where it is determined that the periodic frame errors are present.

# FIG. 1

PORTABLE TERMINAL DEVICE — 100

102 — CONTROL UNIT

STORAGE UNIT — 104

INTERFERENCE AVOIDING PROGRAM — 106

FRAME ERROR ARRAY — 124

DELAYED FRAME ERROR ARRAYS — 128

DISPLAY UNIT — 108

KEY MANIPULATION UNIT — 110

VOICE INPUT UNIT — 112

VOICE OUTPUT UNIT — 114

FRAME-ERROR MONITORING UNIT — 122

AUTOCORRELATION-CO-EFFICIENT CALCULATING UNIT — 126

CORRELATION-COEFFICINT DETERMINING UNIT — 130

INTERFERENCE AVOIDING UNIT — 132

WIRELESS COMMUNICATION UNIT — 116

120

118

FIG. 2

## FIG. 3

START

MONITOR FRAME ERRORS — S200

S210

ANY FRAME ERROR HAS BEEN DETECTED ? — NO

YES

STORE FRAME ERROR ARRAY — S220

S230

DETERMINE CORRELATION COEFFICIENT

CORRELATION COEFFICIENT EQUAL TO OR LESS THAN THRESHOLD VALUE

CORRELATION COEFFICIENT EXCEEDING THRESHOLD VALUE

AVOID INTERFERENCE — S240

# FIG. 4

*FRAME HAVING NO ERROR IS EXPRESSED BY 0, AND FRAME HAVING ERROR IS EXPRESSED BY 1

ELAPSED TIME ↓

| | | $X_i$ 0 | $Y_i$ 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|---|---|
| 0 msec | 0 | 1 | 0 | 0 | 0 | 0 | 1 | 0 | 0 | 0 | 0 | 1 | 0 | 0 | 0 | 0 | 1 | 0 | 0 | 0 | 0 | 1 |
| 50 msec | 1 | 0 | 0 | 0 | 0 | 1 | 0 | 0 | 0 | 0 | 1 | 0 | 0 | 0 | 0 | 1 | 0 | 0 | 0 | 0 | 1 | 0 |
| 100 msec | 2 | 0 | 0 | 0 | 1 | 0 | 0 | 0 | 0 | 1 | 0 | 0 | 0 | 0 | 1 | 0 | 0 | 0 | 0 | 1 | 0 | 0 |
| 150 msec | 3 | 0 | 0 | 1 | 0 | 0 | 0 | 0 | 1 | 0 | 0 | 0 | 0 | 1 | 0 | 0 | 0 | 0 | 1 | 0 | 0 | 0 |
| 200 msec | 4 | 0 | 1 | 0 | 0 | 0 | 0 | 1 | 0 | 0 | 0 | 0 | 1 | 0 | 0 | 0 | 0 | 1 | 0 | 0 | 0 | 0 |
| 250 msec | 5 | 1 | 0 | 0 | 0 | 0 | 1 | 0 | 0 | 0 | 0 | 1 | 0 | 0 | 0 | 0 | 1 | 0 | 0 | 0 | 0 | 1 |
| 300 msec | 6 | 0 | 0 | 0 | 0 | 1 | 0 | 0 | 0 | 0 | 1 | 0 | 0 | 0 | 0 | 1 | 0 | 0 | 0 | 0 | 1 | 0 |
| 350 msec | 7 | 0 | 0 | 0 | 1 | 0 | 0 | 0 | 0 | 1 | 0 | 0 | 0 | 0 | 1 | 0 | 0 | 0 | 0 | 1 | 0 | 0 |
| 400 msec | 8 | 0 | 0 | 1 | 0 | 0 | 0 | 0 | 1 | 0 | 0 | 0 | 0 | 1 | 0 | 0 | 0 | 0 | 1 | 0 | 0 | 0 |
| 450 msec | 9 | 0 | 1 | 0 | 0 | 0 | 0 | 1 | 0 | 0 | 0 | 0 | 1 | 0 | 0 | 0 | 0 | 1 | 0 | 0 | 0 | 0 |
| 500 msec | 10 | 1 | 0 | 0 | 0 | 0 | 1 | 0 | 0 | 0 | 0 | 1 | 0 | 0 | 0 | 0 | 1 | 0 | 0 | 0 | 0 | 1 |
| 550 msec | 11 | 0 | 0 | 0 | 0 | 1 | 0 | 0 | 0 | 0 | 1 | 0 | 0 | 0 | 0 | 1 | 0 | 0 | 0 | 0 | 1 | 0 |
| 600 msec | 12 | 0 | 0 | 0 | 1 | 0 | 0 | 0 | 0 | 1 | 0 | 0 | 0 | 0 | 1 | 0 | 0 | 0 | 0 | 1 | 0 | 0 |
| 650 msec | 13 | 0 | 0 | 1 | 0 | 0 | 0 | 0 | 1 | 0 | 0 | 0 | 0 | 1 | 0 | 0 | 0 | 0 | 1 | 0 | 0 | 0 |
| 700 msec | 14 | 0 | 1 | 0 | 0 | 0 | 0 | 1 | 0 | 0 | 0 | 0 | 1 | 0 | 0 | 0 | 0 | 1 | 0 | 0 | 0 | 0 |
| 750 msec | 15 | 1 | 0 | 0 | 0 | 0 | 1 | 0 | 0 | 0 | 0 | 1 | 0 | 0 | 0 | 0 | 1 | 0 | 0 | 0 | 0 | 1 |
| 800 msec | 16 | 0 | 0 | 0 | 0 | 1 | 0 | 0 | 0 | 0 | 1 | 0 | 0 | 0 | 0 | 1 | 0 | 0 | 0 | 0 | 1 | 0 |
| 850 msec | 17 | 0 | 0 | 0 | 1 | 0 | 0 | 0 | 0 | 1 | 0 | 0 | 0 | 0 | 1 | 0 | 0 | 0 | 0 | 1 | 0 | 0 |
| 900 msec | 18 | 0 | 0 | 1 | 0 | 0 | 0 | 0 | 1 | 0 | 0 | 0 | 0 | 1 | 0 | 0 | 0 | 0 | 1 | 0 | 0 | 0 |
| 950 msec | 19 | 0 | 1 | 0 | 0 | 0 | 0 | 1 | 0 | 0 | 0 | 0 | 1 | 0 | 0 | 0 | 0 | 1 | 0 | 0 | 0 | 0 |
| 1,000 msec | 20 | 1 | 0 | 0 | 0 | 0 | 1 | 0 | 0 | 0 | 0 | 1 | 0 | 0 | 0 | 0 | 1 | 0 | 0 | 0 | 0 | 1 |

CORRELATION COEFFICIENT: 1.00  -0.25  -0.25  -0.25  -0.25  1.00  -0.25  -0.25  -0.25  -0.25  1.00  -0.25  -0.25  -0.25  -0.25  1.00  -0.25  -0.25  -0.25  -0.25  1.00

← 250msec → FIRST TIME ← 250msec → SECOND TIME ← 250msec → THIRD TIME ← 250msec → FOURTH TIME

EP 2 541 980 A1

## FIG. 5

Xi  Yi

*FRAME HAVING NO ERROR IS EXPRESSED BY 0, AND FRAME HAVING ERROR IS EXPRESSED BY 1

ELAPSED TIME ↓

| | | 0 | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|---|---|
| 0 msec | 0 | 1 | 0 | 0 | 0 | 0 | 1 | 0 | 1 | 0 | 0 | 1 | 0 | 0 | 0 | 0 | 1 | 0 | 0 | 0 | 0 | 1 |
| 50 msec | 1 | 0 | 0 | 0 | 0 | 1 | 0 | 1 | 0 | 0 | 1 | 0 | 0 | 0 | 0 | 1 | 0 | 0 | 0 | 0 | 1 | 0 |
| 100 msec | 2 | 0 | 0 | 0 | 1 | 0 | 1 | 0 | 0 | 1 | 0 | 0 | 0 | 0 | 1 | 0 | 0 | 0 | 0 | 1 | 0 | 0 |
| 150 msec | 3 | 0 | 0 | 1 | 0 | 1 | 0 | 0 | 1 | 0 | 0 | 0 | 0 | 1 | 0 | 0 | 0 | 0 | 1 | 0 | 0 | 0 |
| 200 msec | 4 | 0 | 1 | 0 | 1 | 0 | 0 | 1 | 0 | 0 | 0 | 0 | 1 | 0 | 0 | 0 | 0 | 1 | 0 | 0 | 0 | 0 |
| 250 msec | 5 | 1 | 0 | 1 | 0 | 0 | 1 | 0 | 0 | 0 | 0 | 1 | 0 | 0 | 0 | 0 | 1 | 0 | 0 | 0 | 0 | 1 |
| 300 msec | 6 | 0 | 1 | 0 | 0 | 1 | 0 | 0 | 0 | 0 | 1 | 0 | 0 | 0 | 0 | 1 | 0 | 0 | 0 | 0 | 1 | 0 |
| 350 msec | 7 | 1 | 0 | 0 | 1 | 0 | 0 | 0 | 0 | 1 | 0 | 0 | 0 | 0 | 1 | 0 | 0 | 0 | 0 | 1 | 0 | 0 |
| 400 msec | 8 | 0 | 0 | 1 | 0 | 0 | 0 | 0 | 1 | 0 | 0 | 0 | 0 | 1 | 0 | 0 | 0 | 0 | 1 | 0 | 0 | 0 |
| 450 msec | 9 | 0 | 1 | 0 | 0 | 0 | 1 | 0 | 0 | 0 | 0 | 1 | 0 | 0 | 0 | 0 | 1 | 0 | 0 | 0 | 0 | 0 |
| 500 msec | 10 | 1 | 0 | 0 | 0 | 0 | 1 | 0 | 0 | 0 | 0 | 1 | 0 | 0 | 0 | 0 | 1 | 0 | 0 | 0 | 0 | 1 |
| 550 msec | 11 | 0 | 0 | 0 | 0 | | | | 0 | 1 | 0 | 0 | 0 | 0 | 1 | 0 | 0 | 0 | 0 | 1 | 0 |
| 600 msec | 12 | 0 | 0 | 0 | 0 | | | | 1 | 0 | 0 | 0 | 0 | 1 | 0 | 0 | 0 | 0 | 1 | 0 | 0 |
| 650 msec | 13 | 0 | 0 | 0 | | | | | 0 | 0 | 0 | 0 | 1 | 0 | 0 | 0 | 0 | 1 | 0 | 0 | 0 |
| 700 msec | 14 | 0 | 1 | 0 | 0 | 0 | 0 | 1 | 0 | 0 | 0 | 0 | 1 | 0 | 0 | 0 | 0 | 1 | 0 | 0 | 0 | 0 |
| 750 msec | 15 | 1 | 0 | 0 | 0 | 0 | 1 | 0 | 0 | 0 | 0 | 1 | 0 | 0 | 0 | 0 | 1 | 0 | 0 | 0 | 0 | 1 |
| 800 msec | 16 | 0 | 0 | 0 | 1 | 0 | 0 | 0 | 0 | 1 | 0 | 0 | 0 | 0 | 1 | 0 | 0 | 0 | 0 | 1 | 0 | 0 |
| 850 msec | 17 | 0 | 0 | 0 | 1 | 0 | 0 | 0 | 0 | 1 | 0 | 0 | 0 | 0 | 1 | 0 | 0 | 0 | 0 | 1 | 0 | 0 |
| 900 msec | 18 | 0 | 0 | 1 | 0 | 0 | 0 | 0 | 1 | 0 | 0 | 0 | 0 | 1 | 0 | 0 | 0 | 0 | 1 | 0 | 0 | 0 |
| 950 msec | 19 | 0 | 1 | 0 | 0 | 0 | 1 | 0 | 0 | 0 | 0 | 1 | 0 | 0 | 0 | 0 | 1 | 0 | 0 | 0 | 0 | 0 |
| 1,000 msec | 20 | 1 | 0 | 0 | 0 | 0 | 1 | 0 | 0 | 0 | 0 | 1 | 0 | 0 | 0 | 0 | 1 | 0 | 0 | 0 | 0 | 1 |

OCCURRENCE OF ERROR DUE TO ANOTHER FACTOR

CORRELATION COEFFICIENT: 1.00  -0.33  -0.07  -0.07  -0.33  (0.73)  -0.33  -0.07  0.00  -0.29  (0.87)  -0.29  -0.29  0.00  -0.29  (0.87)  -0.29  -0.29  0.00  -0.29  (0.87)

250msec — FIRST TIME  |  250msec — SECOND TIME  |  250msec — THIRD TIME  |  250msec — FOURTH TIME

EP 2 541 980 A1

## FIG. 6

BASE-STATION MONITORING/CONTROLLING DEVICE 300

BASE STATION

BASE STATION 120

BASE STATION

TERMINAL 100

140

TERMINAL

TERMINAL

TERMINAL

TERMINAL

## INTERNATIONAL SEARCH REPORT

| | International application No. |
|---|---|
| | PCT/JP2011/054191 |

**A. CLASSIFICATION OF SUBJECT MATTER**
*H04W16/14(2009.01)i, H04J3/00(2006.01)i, H04W28/04(2009.01)i*

According to International Patent Classification (IPC) or to both national classification and IPC

**B. FIELDS SEARCHED**

Minimum documentation searched (classification system followed by classification symbols)
H04W16/14, H04J3/00, H04W28/04

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-167200 A (Toshiba Corp.), 17 July 2008 (17.07.2008), abstract; claims 1 to 4; paragraphs [0058] to [0086]; fig. 1 to 6 & US 2008/0161035 A1 | 1-10 |
| Y | JP 11-150751 A (Matsushita Electric Industrial Co., Ltd.), 02 June 1999 (02.06.1999), abstract; claims 1 to 3, 5 & US 6510189 B1 & WO 1999/013665 A1 | 1-10 |
| Y | JP 2009-213093 A (KDDI R&D Laboratories, Inc.), 17 September 2009 (17.09.2009), abstract; paragraph [0038]; fig. 3 (Family: none) | 3 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 May, 2011 (16.05.11) | 24 May, 2011 (24.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 541 980 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002118875 A
- JP 2010038620 A